(19) Europäisches Patentamt
European Patent Office
Office européen des brevets

(11) **EP 3 730 285 A1**

(12) **EUROPEAN PATENT APPLICATION**
published in accordance with Art. 153(4) EPC

(43) Date of publication:
**28.10.2020 Bulletin 2020/44**

(51) Int Cl.:
**B32B 5/26** (2006.01)　　**G10K 11/168** (2006.01)

(21) Application number: **18890950.1**

(22) Date of filing: **12.12.2018**

(86) International application number:
**PCT/JP2018/045649**

(87) International publication number:
**WO 2019/124186 (27.06.2019 Gazette 2019/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.12.2017　JP 2017246285**

(71) Applicants:
• **JNC Corporation**
**Chiyoda-ku**
**Tokyo 100-8105 (JP)**

• **JNC Fibers Corporation**
**Tokyo 100-0004 (JP)**

(72) Inventors:
• **HATTORI Takayuki**
**Moriyama-shi, Shiga 524-0001 (JP)**
• **NISHIJIMA Masaru**
**Moriyama-shi, Shiga 524-0001 (JP)**

(74) Representative: **Becker, Eberhard**
**Becker & Kurig Partnerschaft**
**Patentanwälte PartmbB**
**Bavariastrasse 7**
**80336 München (DE)**

(54) **MULTILAYER SOUND ABSORBING MATERIAL**

(57)　The present invention addresses the problem of providing a sound absorbing material which exhibits excellent sound absorption performance from a low frequency range to a high frequency range. A multilayer sound absorbing material which comprises at least two fiber layers and at least one base material layer that is arranged between a fiber layer and another fiber layer. The fiber layers have a void fraction of from 85% to 94% (inclusive) and a density of from 0.06 g/cm$^3$ to 0.5 g/cm$^3$ (inclusive). The base material layer has a void fraction of 95% or more but less than 100% and a density of from 0.008 g/cm$^3$ to 0.05 g/cm$^3$ (inclusive). The base material layer is composed of at least one fabric selected from the group consisting of nonwoven fabrics and woven fabrics.

FIG. 1

**Description**

[Technical Field]

The present invention relates to a sound absorption member having a laminated structure in which layers of two or more kinds are layered.

[Background Art]

Sound absorption members are products having a function of absorbing sound and are used frequently in the fields of architecture and automobiles. It is known that a nonwoven fabric is used as a material for constituting a sound absorption member. For example, Patent Literature 1 discloses a composite nonwoven fabric web including submicron fibers having a median diameter of less than 1 $\mu$m, and micro fibers having a median diameter of at least 1 $\mu$m. In the composite nonwoven fabric web of Patent Literature 1, a gradient of a mixture ratio is formed in a thickness direction and an inhomogeneous fibrous mixture is obtained by changing the mixture ratio of fibers of two kinds having different median diameters. A representative embodiment discloses that a web constituted by mixing different fibers can be formed by forming a microfiber flow, separately forming a submicron fiber flow, and adding the submicron fiber flow to the microfiber flow.

In addition, Patent Literature 2 discloses a laminated sound absorption nonwoven fabric which absorbs sound of a low frequency and a high frequency and includes a resonance film and at least one different fiber material layer. The resonance film is formed of a nanofiber layer having a diameter up to 600 nm and a surface weight (weight per area) within a range of 0.1 g/m$^2$ to 5 g/m$^2$. It is disclosed that the nanofiber layer is typically made through electrospinning, whereas a base material layer is a fiber-woven fabric having a diameter within a range of 10 $\mu$m to 45 $\mu$m and a weight per area within a range of 5 g/m$^2$ to 100 $\mu$m$^2$, and another layer may be layered. In addition, it is also disclosed that this layered body may be further layered in order to attain a suitable thickness and a suitable weight per area.

Patent Literature 3 discloses a laminated sound absorption member having a sound absorption coefficient at 2,000 Hz of 85% or higher, in which (1) a layer that is constituted of nanofibers formed of a thermoplastic resin having a diameter of a single fiber within a range of 1 to 500 nm, (2) a nonwoven fabric A that includes a layer constituted of fibers having a diameter of a single fiber larger than that of the nanofibers, and a nonwoven fabric B that has a particular weight per area and a particular fiber diameter are layered. Patent Literature 3 discloses that the laminated sound absorption member is produced by pasting the nonwoven fabric A (surface layer part), to which firmness or dimensional stability is imparted by supporting a layer having ultrafine voids constituted of nanofibers with a layer having a larger diameter of a single fiber than that, and the nonwoven fabric B (foundation part) having sufficient air permeability and a large weight per area, and has high sound absorbency and heat insulation properties as well.

Patent Literature 4 discloses a nonwoven fabric structure which is formed of nanofibers and has an excellent sound absorption characteristic. The nonwoven fabric structure of Patent Literature 4 is characterized by including a fiber material which includes nanofibers having fiber diameters of less than 1 $\mu$m and having a thickness of the fiber material of 10 mm or longer. In addition, it is disclosed that the fiber material may be supported by a support, and a structure in which fiber materials and supports are repeatedly layered may be adopted. For example, nanofibers are formed by a melt-blowing method, and an example discloses that a layer of a nanofiber material having a fiber diameter of 0.5 $\mu$m and a weight per area of 350 g/m$^2$ is formed on a nonwoven fabric of a polypropylene spun lace serving as a support.

[Citation List]

[Patent Literature]

[Patent Literature 1]
Published Japanese Translation No. 2011-508113 of the PCT International Publication
[Patent Literature 2]
Published Japanese Translation No. 2008-537798 of the PCT International Publication
[Patent Literature 3]
Japanese Patent Laid-Open No. 2015-30218
[Patent Literature 4]
Japanese Patent Laid-Open No. 2016-121426

[Summary of Invention]

[Technical Problem]

As described above, nonwoven fabric layered bodies having various constitutions have been examined as sound absorption members. Using microfibers referred to as nanofibers or submicron fibers in combination with different fibers to exhibit distinct sound absorption characteristics through a combination or a constitution is known. However, there is demand for a sound absorption member which has a more excellent sound absorption characteristic and particularly exhibits excellent sound absorption performance in a range of a relatively high frequency within a range of approximately 2,000 to 3,000 Hz, and a sound absorption member which is excellent in space saving. In consideration of such circumstances, an objective of the present invention is to provide a sound absorption member which exhibits excellent sound absorbency in a low frequency range to a high frequency range.

[Solution to Problem]

The inventors have conducted repeated examinations in order to achieve the foregoing objective. As a result, regarding a laminated sound absorption member including a base material layer and fiber layers, the inventors have found that a laminated sound absorption member, which includes at least two fiber layers that have a void fraction and a density in particular ranges and a base material layer that has a void fraction and a density in particular ranges therebetween, exhibits excellent sound absorbency in a low frequency range to a high frequency range and is excellent in space saving, and thus completed the present invention.
The present invention has constitutions as follows.

[1] There is provided a laminated sound absorption member including at least two fiber layers, and at least one base material layer that is present between a fiber layer and another fiber layer. The fiber layers have a void fraction within a range of 85% to 94% and a density within a range of 0.06 g/cm$^3$ to 0.5 g/cm$^3$. The base material layer has a void fraction within a range of 95% to less than 100% and a density within a range of 0.008 g/cm$^3$ to 0.05 g/cm$^3$. The base material layer is at least one kind selected from the group consisting of nonwoven fabrics and woven fabrics.
[2] In the laminated sound absorption member according to [1], the fiber layers have a weight per area within a range of 0.1 g/m$^2$ to 200 g/m$^2$.
[3] In the laminated sound absorption member according to [1] or [2], a base material constituting the base material layer is a nonwoven fabric formed of fibers of at least one kind selected from the group consisting of polyethylene phthalate, polybutylene terephthalate, polyethylene, and polypropylene, or composite fibers of two or more kinds selected from the group consisting of polyethylene phthalate, polybutylene terephthalate, polyethylene, and polypropylene; and the base material layer has a weight per area within a range of 1 g/m$^2$ to 500 g/m$^2$.
[4] In the laminated sound absorption member according to any one of [1] to [3], fibers constituting the fiber layers are at least one kind selected from the group consisting of polyvinylidene fluoride, nylon 6,6, polyacrylonitrile, polystyrene, polyurethane, polysulfone, and polyvinyl alcohol.
[5] In the laminated sound absorption member according to any one of [1] to [4], in a normal incidence sound absorption coefficient measurement method, an average sound absorption coefficient ($\alpha$) of sound absorption coefficients within a frequency range of 500 Hz to 1,000 Hz is calculated, and a value of the average sound absorption coefficient ($\alpha$) is within a range satisfying the following expression.

$$1.00 \geq \alpha \geq 0.20$$

[6] In the laminated sound absorption member according to any one of [1] to [5], in a normal incidence sound absorption coefficient measurement method, an average sound absorption coefficient ($\beta$) of sound absorption coefficients within a frequency range of 800 Hz to 2,000 Hz is calculated, and a value of the average sound absorption coefficient ($\beta$) is within a range satisfying the following expression.

$$1.00 \geq \beta \geq 0.30$$

[7] In the laminated sound absorption member according to any one of [1] to [6], in a normal incidence sound absorption coefficient measurement method, an average sound absorption coefficient ($\gamma$) of sound absorption coefficients within a frequency range of 2,000 Hz to 5,000 Hz is calculated, and a value of the average sound absorption

coefficient ($\gamma$) is within a range satisfying the following expression.

$$1.00 \geq \gamma \geq 0.89$$

[Advantageous Effects of Invention]

According to the present invention having the constitution described above, it is possible to obtain a sound absorption member which exhibits a particularly excellent sound absorption characteristic in a low frequency range to a high frequency range. The laminated sound absorption member of the present invention has a peak of the sound absorption characteristic in a higher range than those of sound absorption members in the related art and exhibits particularly excellent sound absorption performance in a range of 500 Hz or higher. In the field of automobiles, countermeasures against motor noise have become an issue in accordance with the increase in hybrid automobiles and electric automobiles. Regarding motor noise, since noise in a low frequency range to a high frequency range is generated in accordance with a rotational speed, it is said that countermeasures for these frequency ranges are necessary. In addition, it is said that the sound range of wind noise is within a range of approximately 1,000 to 3,000 Hz. The laminated sound absorption member of the present invention is useful for countermeasures against such noise. In addition, the laminated sound absorption member of the present invention can be reduced in weight and thickness compared to a sound absorption member formed of a porous material, glass fibers or the like. Therefore, weight reduction of members and space saving can be achieved, and this is particularly useful as a sound absorption member for the field of automobiles.

[Brief Description of Drawings]

Fig. 1 is a graph showing sound absorption characteristics of an example (Example 5) and a comparative example (Comparative Example 1) of the present invention.
Fig. 2 is a graph showing sound absorption characteristics of an example (Example 18) and a comparative example (Comparative Example 2) of the present invention.

[Description of Embodiment]

Hereinafter, the present invention will be described in detail.

(Structure of laminated sound absorption member)

A laminated sound absorption member of the present invention is constituted to include a base material layer and fiber layers each having a particular void fraction and a particular density. In the laminated sound absorption member, two or more fiber layers are included, and the base material layer is interposed between the fiber layers.
The laminated sound absorption member includes two or more fiber layers, preferably two to six layers, and more preferably two to three layers. Each fiber layer may be formed of one fibrous structure or may have a form in which a plurality of fibrous structures is superposed in one fiber layer.
In addition, at least one base material layer is interposed between a fiber layer and another fiber layer. Each base material layer may be formed of one base material and may have a form in which a plurality of base materials is superposed in one base material layer. That is, typically, it is preferable that the laminated sound absorption member have a constitution of fiber layer/base material layer/fiber layer when there are two fiber layers, and that the laminated sound absorption member have a constitution of fiber layer/base material layer/fiber layer/base material layer/fiber layer when there are three fiber layers.
Each of the fiber layers and the base material layers included in the laminated sound absorption member may be one kind, but fiber layers or base material layers of two or more different kinds may be included therein. In addition, as long as the effects of the present invention are not impaired, a constitution other than fiber layers and a base material layer may be included therein. For example, an additional layer not included in the range stipulated in the present invention (for example, a protective layer, which may be one, two, or more layers), a printed layer, a foam body, a foil, a mesh, a woven fabric or the like may be included therein. In addition, an adhesive layer, a clip, a suture thread, or the like for joining the layers to each other may be included therein.
The layers of the laminated sound absorption member may be physically and/or chemically adhered to each other or may not be adhered to each other. The laminated sound absorption member may have a form in which some of a plurality of layers are adhered to each other and some are not adhered to each other. Regarding adhesion, for example, fiber layers and a base material layer may be adhered to each other by performing heating in a step of forming fiber layers or as a post-step, melting some of fibers constituting the fiber layers, and fusing the fiber layers with the base material layer. In addition, it is also preferable that the layers be adhered to each other by applying an adhesive to the base material layer or between the fiber layers.

The thickness of the laminated sound absorption member is not particularly limited as long as the effects of the present invention can be obtained. However, for example, the thickness can be within a range of 1 mm to 50 mm, can preferably be within a range of 3 mm to 40 mm, and can more preferably be within a range of 3 mm to 30 mm in view of space saving. The thickness of the laminated sound absorption member typically means the sum of the thicknesses of the fiber layers and the base material layer. When an exterior body such as a cartridge or a lid is attached thereto, the thickness of the part is not included therein.

Air permeability of the laminated sound absorption member is not particularly limited as long as desired sound absorption performance can be obtained. However, the air permeability thereof can be within a range of 10 $\mu$m/Pa·s to 1,000 $\mu$m/Pa·s and is more preferably within a range of 10 $\mu$m/Pa·s to 500 $\mu$m/Pa·s. In the related art, it has been assumed that sound is less likely to pass through, that is, a sound insulating property is effective, when air permeability becomes lower in a sound absorption member in which sound insulating performance is expected in addition to the sound absorption performance. However, since the laminated sound absorption member of the present invention has high air permeability, reflection of sound is reduced. Moreover, high sound absorbency can be obtained by employing a layer constitution having excellent sound absorbency. Air permeability can be measured by a known method. For example, it can be measured by a Gurley tester method.

The laminated sound absorption member has a laminated structure in which a base material layer is sandwiched between one fiber layer and another fiber layer different from the fiber layer. In the case of such a form, the distance between the fiber layer and the other fiber layer (the thickness of the base material layer, which is also referred to as an interlayer distance) is preferably within a range of 2.5 mm to 30 mm and is more preferably within a range of 3 mm to 15 mm. If the interlayer distance is 2.5 mm or longer, the sound absorption performance in a low frequency range to a high frequency range becomes favorable. In addition, if the interlayer distance is 30 mm or shorter, the thickness is not excessively increased and the sound absorption member is suitable for space saving.

(Constitution of each layer: fiber layer)

The fiber layers included in the laminated sound absorption member of the present invention have a void fraction within a range of 85% to 94% and a density within a range of 0.06 g/cm$^3$ to 0.5 g/cm$^3$. If the void fraction is 85% or higher, it is preferable in that increase of reflected waves is curbed and sound waves can be introduced into the sound absorption member by curbing the rigidity of a raw material constituting an outer layer. If the void fraction is 94% or lower, sound inside the sound absorption member is repeatedly reflected due to the density difference between an outer layer and an inner layer by controlling the flow resistance caused by the density difference between fine fiber layers and base material fibers, and thus sound inside the sound absorption member can be attenuated, which is preferable. In addition, if the density is 0.06 g/cm$^3$ or higher, it is preferable in that the sound absorption member has a rigidity which can maintain a constant interlayer distance. If the density is 0.5 g/cm$^3$ or lower, it is preferable in that weight reduction can be maintained for the sound absorption member.

It is preferable that fibers constituting a fiber layer be fibers having a fiber diameter of less than 10 $\mu$m. A fiber diameter of less than 10 $\mu$m means that the average fiber diameter is within this numerical range. If the fiber diameter is less than 10 $\mu$m, a dense and thin film having a low void fraction and a high density can be obtained, which is preferable. If the fiber diameter is less than 1 $\mu$m, a dense and thin film having a lower void fraction and a higher density can be obtained, which is more preferable. The fiber diameter can be measured by a known method. For example, the fiber diameter is a value obtained through measurement or calculation from an enlarged photo of a fiber layer surface, and a specific measurement method will be described in detail with examples.

It is preferable that a nonwoven fabric constituting a fiber layer be fibers having an average flow rate pore diameter of less than 10 $\mu$m. If the average flow rate pore diameter is less than 10 $\mu$m, the flow resistance in fine fiber layers and base material fibers can be controlled, and sound inside the sound absorption member is repeatedly reflected. Therefore, sound inside the sound absorption member can be attenuated, which is favorable.

In the fiber layers included in the laminated sound absorption member of the present invention, one fiber layer may be formed of one fibrous structure. In addition, a plurality of fibrous aggregates may be included in one fiber layer, such that layers of superposed fibrous aggregates form one fiber layer. In this specification, a fibrous aggregate means a fibrous aggregate in one continuous body. The weight per area of a fiber layer is preferably within a range of 0.1 g/m$^2$ to 200 g/m$^2$ and is more preferably within a range of 0.3 g/m$^2$ to 100 g/m$^2$. If the weight per area is 0.1 g/m$^2$ or larger, a resonance space can be formed by forming a partition wall as a fine film, and the sound absorbency can be improved. If the weight per area is less than 200 $\mu$m$^2$, reflection of sound can be curbed and a sound absorption coefficient can be increased without increasing the rigidity of a film.

A fibrous structure constituting a fiber layer is preferably a nonwoven fabric and is not particularly limited as long as it has a void fraction and a density in the foregoing ranges. However, for example, it is preferable that a fibrous structure be a melt-blown nonwoven fabric, a nonwoven fabric formed by an electrospinning method, or the like. According to an electrospinning method or a melt-blowing method, microfibers can be efficiently layered on a base material, and a layer having a void fraction and a density in a desired range can be obtained. A specific electrospinning method will be described in detail in description of a manufacturing method.

A resin constituting a fiber layer is not particularly limited as long as the effects of the invention can be obtained. However, examples thereof can include polyesters such as a polyolefin-based resin, polyurethane, polylactic acid, an acrylic resin, polyethylene terephthalate, and polybutylene terephthalate; nylons (amide resins) such as nylon 6, nylon 6,6, and nylon 1,2; polyphenylene sulfide; polyvinyl alcohol; polystyrene; polysulfone; liquid crystal polymers; a polyethylene-vinyl acetate copolymer; polyacrylonitrile; polyvinylidene fluoride; and polyvinylidene fluoride-hexafluoropropylene. A polyethylene resin and a polypropylene resin can be presented as examples of a polyolefin-based resin. Examples of a polyethylene resin can include low density polyethylene (LDPE), high density polyethylene (HDPE), and linear low density polyethylene (LLDPE). Examples of a polypropylene resin can include a homopolymer of propylene; and copolymer polypropylene in which propylene and a different monomer, ethylene and butene, and the like are polymerized. A fibrous aggregate preferably includes one kind of the foregoing resins and may include two or more kinds thereof.

When the fiber layer is a nonwoven fabric formed by an electrospinning method, polyvinylidene fluoride, nylon 6,6, polyacrylonitrile, polystyrene, polyurethane, polysulfone, and polyvinyl alcohol of the foregoing resins are more preferably used in an electrospinning method in view of their solubility in various solvents. In addition, when the fiber layer is a melt-blown nonwoven fabric, a polypropylene resin of the foregoing resins is preferably used. The fiber layer preferably includes one kind of the foregoing resins and may include two or more kinds thereof.

In addition, the foregoing fibers may include various additives other than a resin. Examples of an additive which can be added to a resin can include a filler, a stabilizer, a plasticizer, an adhesive, an adhesion promoter (for example, silane and titanate), silica, glass, clay, talc, a pigment, a colorant, an antioxidant, an fluorescent brightener, an antibacterial agent, a surfactant, a flame retardant, and a fluoropolymer. Using one or more of the foregoing additives, the weight and/or cost of fibers and layers to be obtained may be reduced, the viscosity may be adjusted, and thermal characteristics of fibers may be denatured. In addition, various physical characteristics derived from characteristics of additives including electrical characteristics, optical characteristics, characteristics related to the density, and characteristics related to a liquid barrier or adhesiveness may be imparted.

(Constitution of each layer: base material layer)

The base material layer in the laminated sound absorption member mainly plays a role of sound absorbency and also has a function of supporting fiber layers and retaining the shape of the sound absorption member in its entirety. The laminated sound absorption member of the present invention is characterized by having a form in which an intermediate material (base material layer) having a high void fraction and a low density is sandwiched between fiber layers having a low void fraction. The base material layer is characterized by having a high void fraction and a low density. On the other hand, it is preferable that the base material layer support fiber layers and have a sufficient rigidity to maintain a constant interlayer distance.

Specifically, the base material layer has a void fraction within a range of 95% to less than 100% and a density within a range of 0.008 g/cm$^3$ to 0.05 g/cm$^3$. When the void fraction is 95% or higher, sound inside the sound absorption member is repeatedly reflected due to the density difference between an outer layer and an inner layer by controlling the flow resistance caused by the density difference between fine fiber layers and base material fibers. Therefore, the sound absorbency is improved in that sound inside the sound absorption member can be attenuated. When the void fraction is less than 100%, the base material layer can support fiber layers and can retain the form of the laminated sound absorption member. In addition, if the density is 0.008 g/cm$^3$ or higher, it is preferable in that the base material layer can support fiber layers as a sound absorption member and has a sufficient rigidity to maintain a constant interlayer distance. If the density is 0.05 g/cm$^3$ or lower, it is preferable in that weight reduction can be maintained as a sound absorption member.

The base material layer may be formed of a base material of one layer or may have a form in which a plurality of base materials is superposed. A base material constituting the base material layer is not particularly limited as long as fiber layers can be layered on at least one surface thereof. A nonwoven fabric, glass fibers, paper, a woven fabric, foam (foam body layer), a mesh, or the like can be used. Particularly, the base material is preferably any one kind or more of nonwoven fabrics and woven fabrics and is more preferably nonwoven fabrics. A base material included in the laminated sound absorption member may be one kind, and it is also preferable that base materials of two or more kinds be included therein.

When the base material is a nonwoven fabric, regarding the kind of the nonwoven fabric, a melt-blown nonwoven fabric, a spun lace nonwoven fabric, a spun-bonded nonwoven fabric, a through-air nonwoven fabric, a thermal-bonded nonwoven fabric, a needle-punched nonwoven fabric, or the like can be used, and it can be suitably selected depending on the desired physical properties or functions.

A thermoplastic resin can be used as a resin constituting fibers of a nonwoven fabric. For example, a polyolefin-based resin, a polyester-based resin such as polyethylene terephthalate, or a polyamide-based resin can be presented as examples. A polyolefin-based resin is a homopolymer such as ethylene, propylene, butene-1, or 4-methylpentene-1; a random copolymer or a block copolymer of these and one kind or more of other $\alpha$-olefins, that is, ethylene, propylene, butene-1, pentene-1, hexene-1, 4-methylpentene-1, and the like; or a copolymer in which these are combined. Alternatively, a mixture of these or the like can be included. Examples of a polyamide-based resin can include nylon 4, nylon 6, nylon 7, nylon 1,1, nylon 1,2, nylon 6,6, nylon 6,10, polymethacrylidene adipamide, polyparaxylidene decanamide, polybiscyclohexylmethane decanamide, and copolyamides thereof. Examples of a polyester-based resin can include polytetramethylene terephthalate, polybutyl terephthalate, polyethylene oxybenzoate, poly(1,4-dimethylcyclohexane terephthalate), and a copolymer thereof in addition to polyethylene terephthalate. Among these, in view of their high versatility and availability of thermal fusion, it is preferable to use one of polyethylene terephthalate, polybutylene terephthalate, polyethylene, and polypropylene, or two or more kinds thereof in combination.

A similar resin can also be used when a base material is a woven fabric or a mesh.

In addition, fibers consisting of a single component can also be used as fibers constituting a nonwoven fabric of a base material layer. However, in consideration of an effect of fusion of intersections between fibers, it is preferable to use fibers consisting of composite components of a low-melting point resin and a high-melting point resin, that is, composite fibers consisting of two or more components having different melting points. Examples of a composite form can include a sheath-core type, an eccentric sheath-core type, and a parallel type. In addition, it is also preferable to use mixed fibers of two or more components having different melting points as fibers constituting a nonwoven fabric of a base material layer. Mixed fibers mean fibers in which fibers formed of a high-melting point resin and fibers formed of a low-melting point resin are present independently in a mixed state.

The average fiber diameter of fibers constituting a nonwoven fabric of a base material layer is not particularly limited. However, a nonwoven fabric formed of fibers having an average fiber diameter within a range of 10 $\mu$m to 1 mm can be used. If the average fiber diameter is 10 $\mu$m or longer, the flow resistance caused by the density difference between fine fiber layers and base material fibers can be controlled. If the average fiber diameter is less than 1 mm, versatility is not impaired, and it is easy to acquire a nonwoven fabric. The fiber diameter is more preferably within a range of 10 $\mu$m to 100 $\mu$m. The fiber diameter can be measured by a method similar to that of measuring the fiber diameters of fiber layers.

The base material layer is interposed between a fiber layer and another fiber layer. In addition to being interposed between a fiber layer and another fiber layer, the base material layer may be included as a layer positioned on the outermost layer in the laminated sound absorption member. A base material may constitute a base material layer with only one layer, and it is also preferable to constitute one base material layer using two or more layers which are continuously disposed. When two or more layers of base materials are continuously disposed, there is an advantage in that the interlayer distance of fiber layers can be controlled due to the thickness of the base material layer.

The weight per area of the base material layer need only be 1 g/m$^2$ or larger, is preferably within a range of 1 g/m$^2$ to 500 $\mu$m$^2$, and is more preferably within a range of 15 g/m$^2$ to 300 g/m$^2$. If the weight per area of the base material layer is 1 g/m$^2$ or larger, strength required for a sound absorption member can be obtained.

In the present invention, the base material layer has a thickness of 2.5 mm or longer. The upper limit for the thickness of the base material layer is not particularly limited. However, in view of space saving, the upper limit is preferably within a range of 2.5 mm to 25 mm and is more preferably within a range of 3 mm to 20 mm.

In addition, for example, the thickness per sheet of the base material constituting the base material layer can be within a range of 2.5 mm to 15 mm and is more preferably within a range of 3 mm to 10 mm. If the thickness per sheet of the base material is 2.5 mm or longer, no creases occur, it is easy to handle the base material, and productivity becomes favorable. In addition, if the thickness of the base material layer is 15 mm or smaller, there is no risk of impeding space saving.

Within a range not impeding the effects of the present invention, various kinds of additives, for example, a colorant, an antioxidant, an optical stabilizer, a UV absorber, a neutralizer, a nucleating agent, a lubricant, an antibacterial agent, a flame retardant, a plasticizer, other thermoplastic resins, and the like may be added to the base material layer. In addition, a surface may be subjected to treatment using various kinds of finishing agents, and a function such as water repellency, an antistatic property, surface smoothness, or wear resistance may be imparted thereto through the treatment.

(Sound absorption characteristics of laminated sound absorption member)

The laminated sound absorption member of the present invention is characterized by having excellent sound absorbency in a low frequency range (frequency range of 1,000 Hz or lower), an intermediate frequency range (800 to 2,000 Hz), and a high frequency range (2,000 to 5,000 Hz). The laminated sound absorption member of the present invention exhibits sound absorption characteristics different from those of a sound absorption member in the related art, such as excellent sound absorbency particularly in a range of 500 Hz to 3,000 Hz. The laminated sound absorption member of the present invention is not constrained by any particular theory. However, it is assumed that a closed space sandwiched between fiber layers is made due to a constitution in which a base material layer having a low density is sandwiched between dense fiber layers, so that reflection occurs repeatedly in the closed space and sound is absorbed in a highly efficient manner. Moreover, since fiber layers and a base material layer having a void fraction and a density in particular ranges are used, it is assumed that sound is transmitted while reflection is prevented, sound can be more efficiently absorbed by the base material layer, and thus a thin sound absorption member having high sound absorbency can be obtained.

A method of evaluating sound absorbency will be described in detail with examples.

(Method of manufacturing laminated sound absorption member)

A method of manufacturing a laminated sound absorption member is not particularly limited. However, for example, a laminated sound absorption member can be obtained by a manufacturing method including a step of making a fiber layered body in which one fiber layer is formed on one base material layer (that is, a layered body of base material layer/fiber layer) or a fiber layered body in which one fiber layer is formed on a protective layer (that is, a layered body of protective layer/fiber layer), and a step of integrating a plurality of fiber layered bodies superposed in a predetermined order and a predetermined number of sheets. When a fiber layered body is constituted of a protective layer and fiber layers, they can be integrated by layering a base material layer such that it is sandwiched between a fiber layer and another fiber layer. In a step of superposing a fiber layered body, it is also preferable that an additional layer other than the fiber layered body, for example, an additional base material layer, be additionally layered.

When a nonwoven fabric is used as a base material layer, a nonwoven fabric may be manufactured by a known method, or a commercially available nonwoven fabric can be selected and used. It is preferable to use an electrospinning method or a melt-blowing method in the step of forming a fiber layer on a base material layer or a protective layer.

An electrospinning method is a method of obtaining fibers on a collector by discharging a spinning solution, causing an electric field to act, and making a discharged spinning solution into fibers. Examples thereof can include a spinning method in which a spinning solution is pushed out from a nozzle and an electric field is caused to act, a spinning method in which a spinning solution is frothed and an electric field is caused to act, and a spinning method in which a spinning solution is introduced on a surface of a cylindrical electrode and an electric field is caused to act. In the present invention, a nonwoven fabric or the like which will serve as a base material layer (or a protective layer) is inserted on the collector, and fibers can be accumulated thereon. A spinning solution is not particularly limited as long as it has spinnability. However, a solution obtained by dispersing a resin in a solvent, a solution obtained by dissolving a resin in a solvent, a solution obtained by melting a resin through heat or laser irradiation, or the like can be used.

For the purpose of improving stability of spinning or fiber-forming properties, a spinning solution may further contain a surfactant. Examples of a surfactant can include an anionic surfactant such as sodium dodecyl sulfate, a cationic surfactant such as tetrabutylammonium bromide, and a nonionic surfactant such as polyoxyethylene sorbitan monolaurate. It is preferable that the concentration of a surfactant be in a range of 5 weight% or lower with respect to a spinning solution. If the concentration is 5 weight% or lower, improvement of effects suitable for use can be obtained, which is preferable. In addition, components other than those described above can also be included as components of a spinning solution as long as they are in a range in which the effects of the present invention are not notably impaired.

A melt-blowing method is a method of forming a nonwoven fabric by pushing out a resin which will become a fiber layer on a base material layer from a nozzle in a melted state and spraying the resin using heated and compressed air. For example, a nonwoven fabric can be manufactured using a nonwoven fabric manufacturing device constituted of two extruders having a screw, a heating element, and a gear pump; a spinneret for mixed fibers; a compressed-air generator; an air heater; a collection conveyor including a polyester net; and a winder. The weight per area can be arbitrarily set by adjusting the speed of the conveyor for conveying a base material layer. A resin used for spinning is not particularly limited as long as it has thermoplasticity and has spinnability.

A method of superposing and integrating a plurality of fiber layered bodies obtained as described above is not particularly limited, and a plurality of fiber layered bodies need only be superposed without being adhered to each other. In addition, various adhesion methods, that is, thermocompression using a heated flat roll or an embossing roll, adhesion using a hot-melt agent or a chemical adhesive, heat adhesion using circulating hot air or radiant heat, or the like can be employed. In view of curbing deterioration in physical properties of a fiber layer, it is preferable to perform heat processing of the foregoing methods using circulating hot air or radiant heat. In the case of thermocompression using a flat roll or an embossing roll, there is a possibility that it will be difficult to perform stable manufacturing due to received damage such as a fiber layer which is melted and becomes a film, and ruptures generated in parts around embossed points.

Further, performance deterioration such as deterioration in a sound absorption characteristic is likely to occur. In addition, in the case of adhesion using a hot-melt agent or a chemical adhesive, voids between fibers of a fiber layer may be filled with the components and thus performance deterioration may be likely to occur. On the other hand, in the case of integration performed through heat processing using circulating hot air or radiant heat, there is little damage to fiber layers, and integration can be performed with a sufficient inter-layer peeling strength, which is preferable. The case of integration performed through heat processing using circulating hot air or radiant heat is not particularly limited. However, it is preferable to use a nonwoven fabric and a layered body formed of thermally fusible composite fibers.

Examples

Hereinafter, the present invention will be described in more detail with examples. However, the following examples are merely presented for the purpose of exemplification. The scope of the present invention is not limited to these examples.
A method of measuring a physical property value indicated in the examples and definitions will be described below.

<Average fiber diameter>

A fibrous structure (nonwoven fabric) was observed using Scanning Electron Microscope SU8020 manufactured by Hitachi High-Technologies Corporation, and diameters of 50 fibers were measured using image analysis software. An average value of the fiber diameters of the 50 fibers was adopted as the average fiber diameter.

<Average flow rate pore diameter>

The average flow rate pore diameter was measured (JIS K 3822) using Capillary Flow Porometer (CFP-1200-A) manufactured by Porous Materials INC.

<Measurement of sound absorption coefficient>

Regarding measurement of sound absorption coefficients, samples having a diameter of 16.6 mm were gathered from fiber layered bodies, and the fiber layered bodies were layered under various conditions. Thereafter, a normal incidence sound absorption coefficient was measured when plane sound waves were incident perpendicularly on a test piece within a frequency range of 500 Hz to 5,000 Hz using a normal incidence sound absorption coefficient measuring device "WinZacMTX manufactured by Nihon Onkyo Engineering Co., Ltd." conforming to ASTM E 1050.

<Sound absorbency in low frequency range>

When the sound absorption coefficients within a frequency range of 500 Hz to 1,000 Hz were measured at 129 points (at intervals of 3.9 Hz) and an obtained curve was defined as f(x), an average sound absorption coefficient $\alpha$ was calculated by the following (Expression 1).
[Math. 1]

$$\alpha = \int_{500}^{1000} f(x)\mathrm{d}x / 129 \quad \text{(Expression 1)}$$

The average sound absorption coefficient $\alpha$ indicated sound absorption performance within a frequency range of 500 Hz to 1,000 Hz. When the numerical value was high, it was determined that the sound absorbency was high. When the coefficient $\alpha$ exceeded 0.20, it was evaluated that the sound absorbency in the low frequency range was favorable. When the coefficient $\alpha$ was less than 0.20, it was evaluated that the sound absorbency was poor.

<Sound absorbency in intermediate frequency range>

When the sound absorption coefficients within a frequency range of 800 Hz to 2,000 Hz were measured at 308 points (at intervals of 3.9 Hz) and an obtained curve was defined as f(x), an average sound absorption coefficient $\beta$ was calculated by the following (Expression 2).
The average sound absorption coefficient $\beta$ indicated sound absorption performance within a frequency range of 800 Hz to 2,000 Hz. When the numerical value was high, it was determined that the sound absorbency was high.

When the coefficient β exceeded 0.30, it was evaluated that the sound absorbency in the intermediate frequency range was favorable. When the coefficient β was less than 0.30, it was evaluated that the sound absorbency was poor.
[Math. 2]

$$\beta = \int_{800}^{2000} f(x)\mathrm{d}x \, / \, 308 \quad (\text{Expression 2})$$

<Sound absorbency in high frequency range>

When the sound absorption coefficients within a frequency range of 2,000 Hz to 5,000 Hz were measured at 769 points (at intervals of 3.9 Hz) and an obtained curve was defined as f(x), an average sound absorption coefficient γ was calculated by the following (Expression 3).

The average sound absorption coefficient γ indicated sound absorption performance within a frequency range of 2,000 Hz to 5,000 Hz. When the numerical value was high, it was determined that the sound absorbency was high. When the coefficient γ exceeded 0.89, it was evaluated that the sound absorbency in the high frequency range was favorable. When the coefficient γ was less than 0.89, it was evaluated that the sound absorbency was poor.
[Math. 3]

$$\gamma = \int_{2000}^{5000} f(x)\mathrm{d}x \, / \, 769 \quad (\text{Expression 3})$$

<Preparation of base material>

High-density polyethylene "M6900" (MFR=17 g/10 min) manufactured by KEIYO Polyethylene was used as a high-density polyethylene resin and a polypropylene homopolymer "SA3A" (MFR=11 g/10 min) manufactured by Japan Polypropylene Corporation was used as a polypropylene resin to produce sheath-core type thermally fusible composite fibers in which sheath components having a fiber diameter of 16 $\mu$m were formed of a high-density polyethylene resin and core components were formed of a polypropylene resin by a hot melt spinning method. A card-method through-air nonwoven fabric having a weight per area of 200 $\mu$m$^2$, a thickness of 5 mm, and a width of 1,000 mm was produced using the obtained sheath-core type thermally fusible composite fibers, and this was referred to as a base material A. The base material A had a void fraction of 95.6% and a density of 0.04 g/cm$^3$.

In addition, a card-method through-air nonwoven fabric having a weight per area of 200 $\mu$m$^2$, a thickness of 7 mm, and a width of 1,000 mm was produced using the obtained sheath-core type thermally fusible composite fibers, and this was referred to as a base material F. The base material F had a void fraction of 97.5% and a density of 0.029 g/cm$^3$.

High-density polyethylene "M6900" (MFR=17 g/10 min) manufactured by KEIYO Polyethylene was used as a high-density polyethylene resin and a polypropylene homopolymer "SA3A" (MFR=11 g/10 min) manufactured by Japan Polypropylene Corporation was used as a polypropylene resin to produce sheath-core type thermally fusible composite fibers in which sheath components having a fiber diameter of 2 $\mu$m were formed of a high-density polyethylene resin and core components were formed of a polypropylene resin by a hot melt spinning method. A card-method through-air nonwoven fabric having a weight per area of 20 $\mu$m$^2$, a thickness of 5 mm, and a width of 1,000 mm was produced using the obtained sheath-core type thermally fusible composite fibers.

This nonwoven fabric was cut into a 10 mm square, and the cut nonwoven fabric was sandwiched between sheets of release paper of 25 cm×25 cm, put in an oven at 145°C, and heated for 15 minutes to realize 9.04 g per 20 cm$^2$. Thereafter, the nonwoven fabric was subjected to compression molding to have a thickness of 5 mm, and a base material B was obtained by peeling off the release paper. The base material B had a void fraction of 96.1% and a density of 0.045 g/cm$^3$.

In addition, similarly, the nonwoven fabric was cut into a 10 mm square, and the cut nonwoven fabric was sandwiched between sheets of release paper of 25 cm×25 cm, put in an oven at 145°C, and heated for 15 minutes to realize 4.70 g per 20 cm$^2$. Thereafter, the nonwoven fabric was subjected to compression molding to have a thickness of 5 mm, and a base material C was obtained by peeling off the release paper. The base material C had a void fraction of 98.0% and a density of 0.024 g/cm$^3$.

In addition, similarly, the nonwoven fabric was cut into a 10 mm square, and the cut nonwoven fabric was sandwiched between sheets of release paper of 25 cm×25 cm, put in an oven at 145°C, and heated for 15 minutes to realize 3.12 g per 20 cm$^2$. Thereafter, the nonwoven fabric was subjected to compression molding to have a thickness of 5 mm, and a base material D was obtained by peeling off the release paper. The base material D had a void fraction of 98.7% and a density of 0.016 g/cm$^3$.

[Example 1]

Kynar (brand name) 3120 which was a polyvinylidene fluoride-hexafluoropropylene (which will hereinafter be abbreviated as "PVDF-HFP") resin manufactured by Arkema Inc. was dissolved in a cosolvent (60/40 (w/w)) of N,N-dimethylacetamide and acetone at a concentration of 15 mass%, and an electrospinning solution was prepared. A nonwoven fabric E (PET18S, a weight per area of 18 g/m$^2$ and a thickness of 60 $\mu$m) which would serve as a protective layer was prepared, a fiber layered body constituted of two layers including the nonwoven fabric E and the PVDF-HFP microfibers was produced by performing electrospinning of the PVDF-HFP solution on the nonwoven fabric E. The nonwoven fabric E serving as a protective layer had no sound absorbency and did not affect the performance of the laminated sound absorption member.
Regarding conditions of electrospinning, a 24G needle was used, a supply amount of a single pore solution was 3.0 mL/h, an applied voltage was 35 kV, and a spinning distance was 17.5 cm.
Regarding the obtained PVDF-HFP microfibers in a fiber layered body constituted of two layers, the weight per area of the layer was 1.0 $\mu$m$^2$, the average fiber diameter was 180 nm, and the melting temperature was 168°C. In addition, the void fraction was 90.0%, and the density was 0.18 g/cm$^3$.
Two fiber layered bodies constituted of two layers including the nonwoven fabric E and the PVDF-HFP microfibers, and the base material B were used such that they were superposed in a form of nonwoven fabric E/fiber layer/base material B (base material layer)/fiber layer/nonwoven fabric E. The obtained sample was adopted as a sample for measuring a sound absorption coefficient. Since there were two fiber layers, the number of fiber layers was set to "2".
The normal incidence sound absorption coefficient was measured, and the sound absorbency in the low frequency range (the average sound absorption coefficient $\alpha$ within a range of 500 Hz to 1,000 Hz) was evaluated. The result was 0.27, which was favorable. The normal incidence sound absorption coefficient was measured, and the sound absorbency in the intermediate frequency range (the average sound absorption coefficient $\beta$ within a range of 800 Hz to 2,000 Hz) was evaluated. The result was 0.34, which was favorable. The normal incidence sound absorption coefficient was measured, and the sound absorbency in the high frequency range (the average sound absorption coefficient $\gamma$ within a range of 2,000 Hz to 5,000 Hz) was evaluated. The result was 0.91, which was favorable.

[Example 2]

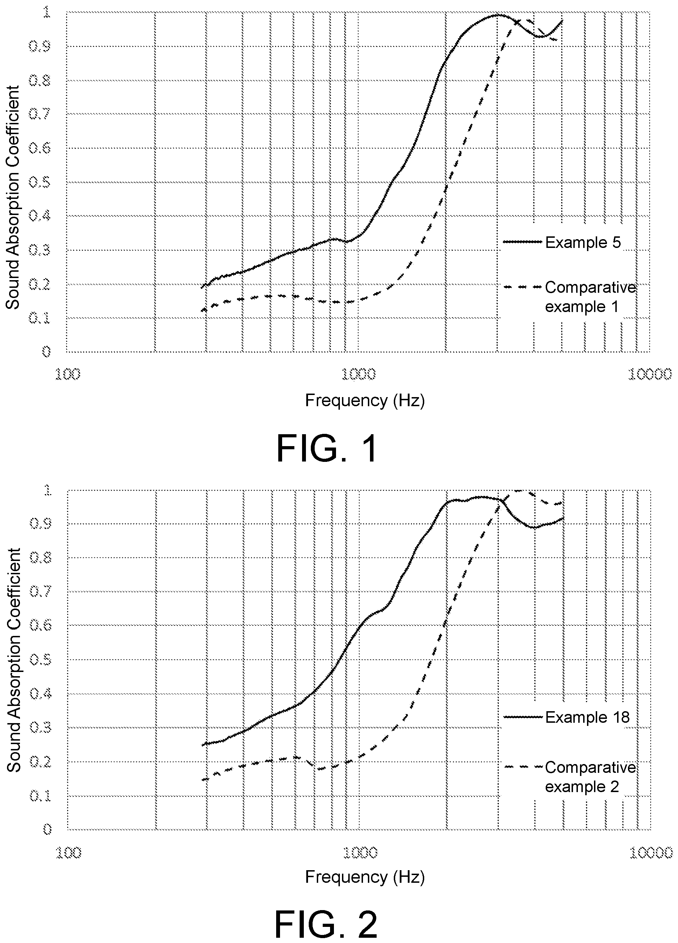

Two fiber layered bodies and the base material nonwoven fabric C were used such that they were superposed in a form of nonwoven fabric E/fiber layer/base material C/fiber layer/nonwoven fabric E to obtain a sample for measuring a sound absorption coefficient.
The normal incidence sound absorption coefficient was measured, and the sound absorbency in the low frequency range (the average sound absorption coefficient $\alpha$ within a range of 500 Hz to 1,000 Hz) was evaluated. The result was 0.26, which was favorable. The normal incidence sound absorption coefficient was measured, and the sound absorbency in the intermediate frequency range (the average sound absorption coefficient $\beta$ within a range of 800 Hz to 2,000 Hz) was evaluated. The result was 0.33, which was favorable. The normal incidence sound absorption coefficient was measured, and the sound absorbency in the high frequency range (the average sound absorption coefficient $\gamma$ within a range of 2,000 Hz to 5,000 Hz) was evaluated. The result was 0.89, which was favorable.
For Examples 3 to 16, samples for measuring a sound absorption coefficient were produced in a manner similar to Examples 1 and 2 except that the number of fiber layers or base material layers, the thickness of the base material layers, the weight per area, and the like were changed as shown in Tables 1 and 2, and the normal incidence sound absorption coefficient was measured and evaluated. Fig. 1 shows a graph of sound absorption characteristics of Example 5 and Comparative Example 1.

[Table 1]

| | Example 1 | Example 2 | Example 3 | Example 4 | Example 5 | Example 6 | Example 7 | Example 8 | Example 9 | Example 10 |
|---|---|---|---|---|---|---|---|---|---|---|
| Layer constitution (Note 1) | */* | */* | */* | */* | *//* | *//* | *//* | *//* | */* | *//* |
| Void fraction of fiber layer (%) | 90.0 | 90.0 | 90.0 | 90.0 | 90.0 | 90.0 | 90.0 | 90.0 | 90.0 | 90.0 |
| Density of fiber layer $(g/cm^3)$ | 0.18 | 0.18 | 0.18 | 0.18 | 0.18 | 0.18 | 0.18 | 0.18 | 0.18 | 0.18 |
| Weight per area of fiber layer $(g/m^2)$ | 1.0 | 1.0 | 1.0 | 1.0 | 1.0 | 1.0 | 1.0 | 1.0 | 1.0 | 1.0 |
| Average flow rate pore diameter of fiber layer $(\mu m)$ | 1.7 | 1.7 | 1.7 | 1.7 | 1.7 | 1.7 | 1.7 | 1.7 | 1.7 | 1.7 |
| Remarks for fiber layer | Electrospinning 2 fiber layers | Electrospinning 2 fiber layers | Electrospinning 2 fiber layers | Electrospinning 2 fiber layers | Electrospinning 2 fiber layers | Electrospinning 2 fiber layers | Electrospinning 2 fiber layers | Electrospinning 2 fiber layers | Electrospinning 2 fiber layers | Electrospinning 2 fiber layers |
| Void fraction of base material layer (%) | 96.1 | 98.0 | 98.7 | 95.6 | 96.1 | 98.0 | 98.7 | 95.6 | 97.5 | 95.6 |
| Density of base material layer $(g/cm^3)$ | 0.045 | 0.024 | 0.016 | 0.040 | 0.045 | 0.024 | 0.016 | 0.040 | 0.029 | 0.040 |
| Weight per area of base material layer $(g/m^2)$ | 226.0 | 117.5 | 78.0 | 200.0 | 452.0 | 235.0 | 156.0 | 400.0 | 200.2 | 400.0 |

(continued)

| | Example 1 | Example 2 | Example 3 | Example 4 | Example 5 | Example 6 | Example 7 | Example 8 | Example 9 | Example 10 |
|---|---|---|---|---|---|---|---|---|---|---|
| Thickness of base material layer (mm) | 5 | 5 | 5 | 5 | 10 | 10 | 10 | 10 | 7 | 10 |
| Remarks for base material | Base material B | Base material C | Base material D | Base material A | Base material Bx2 | Base material Cx2 | Base material Dx2 | Base material Ax2 | Base material F | Base material Ax2 |
| layer | 1 base material layer | 1 base material layer | 1 base material layer | 1 base material layer | 1 base material layer | 1 base material layer | 1 base material layer | 1 base material layer | 1 base material layer | 1 base material layer |
| Sound absorption coefficient 500 to 1,000 Hz | 0.27 | 0.26 | 0.25 | 0.20 | 0.32 | 0.29 | 0.27 | 0.25 | 0.22 | 0.25 |
| Sound absorption coefficient 800 to 2,000 Hz | 0.34 | 0.33 | 0.30 | 0.31 | 0.45 | 0.42 | 0.36 | 0.39 | 0.35 | 0.47 |
| Sound absorption coefficient 2,000 to 5,000 Hz | 0.91 | 0.89 | 0.89 | 0.89 | 0.95 | 0.95 | 0.90 | 0.89 | 0.89 | 0.89 |
| Thickness of sound absorption member (mm) | 5 | 5 | 5 | 5 | 10 | 10 | 10 | 10 | 7 | 10 |

(Note 1) In the field of "fiber layer", the mark * indicates a fiber layer, and the mark / indicates a base material. Constitutions (e.g. protective layer) other than the fiber layer and the base material are omitted.

[Table 2]

| | Example 11 | Example 12 | Example 13 | Example 14 | Example 15 | Example 16 |
|---|---|---|---|---|---|---|
| Layer constitution (Note 1) | */*//* | *//*//* | *//*//* | *//*//* | *//*//* | */*/* |
| Void fraction of fiber layer (%) | 90.0 | 90.0 | 90.0 | 90.0 | 90.0 | 90.0 |
| Density of fiber layer (g/cm$^3$) | 0.18 | 0.18 | 0.18 | 0.18 | 0.18 | 0.18 |
| Weight per area of fiber layer (g/m$^2$) | 1.0 | 1.0 | 1.0 | 1.0 | 1.0 | 1.0 |
| Average flow rate pore diameter of fiber layer ($\mu$m) | 1.7 | 1.7 | 1.7 | 1.7 | 1.7 | 1.7 |
| Remarks for fiber layer | Electrospinning 3 layers | Electrospinning 3 layers | Electrospinning 3 layers | Electrospinning 3 layers | Electrospinning 3 layers | Electrospinning 3 layers |
| Void fraction of base material layer (%) | 96.1 | 98.0 | 98.7 | 95.6 | 97.5 | 97.5 |
| Density of base material layer (g/cm$^3$) | 0.045 | 0.024 | 0.016 | 0.040 | 0.029 | 0.029 |
| Weight per area of base material layer (g/m$^2$) | 452.0 | 235.0 | 156.0 | 400.0 | 400.4 | 200.2 |
| Thickness of base material layer (mm)(Note 2) | 10 | 10 | 10 | 10 | 14 | 7 |
| Remarks for base material layer | Base material B×2 2 base material layers | Base material C×2 2 base material layers | Base material D×2 2 base material layers | Base material A×2 2 base material layers | Base material F×2 2 base material layers | Base material F 2 base material layers |
| Sound absorption coefficient 500 to 1,000 Hz | 0.49 | 0.46 | 0.44 | 0.37 | 0.63 | 0.28 |

(continued)

| | Example 11 | Example 12 | Example 13 | Example 14 | Example 15 | Example 16 |
|---|---|---|---|---|---|---|
| Sound absorption coefficient 800 to 2,000 Hz | 0.70 | 0.64 | 0.61 | 0.74 | 0.70 | 0.51 |
| Sound absorption coefficient 2,000 to 5,000 Hz | 0.89 | 0.90 | 0.96 | 0.90 | 0.90 | 0.89 |
| Thickness of sound absorption member (mm) | 20 | 20 | 20 | 20 | 28 | 14 |

(Note 1) The mark * indicates a fiber layer, and the mark / indicates a base material. Constitutions (e.g. protective layer) other than the fiber layer and the base material are omitted.
(Note 2) The thickness per one base material layer is indicated.

[Example 17]

Fiber layers were formed using a nonwoven fabric manufacturing device constituted of two extruders having a screw (a diameter of 50 mm), a heating element, and a gear pump; a spinneret for mixed fibers (in which 501 holes having hole diameters of 0.3 mm and an effective width of 500 mm were arranged in a row such that a resin is discharged alternately from the two extruders); a compressed-air generator; an air heater; a collection conveyor including a polyester net; and a winder.

As polypropylene resins of raw materials, polypropylene homopolymer 1 (MFR=82 g/10 min) and polypropylene homopolymer 2 ("FR-185" (MFR=1400 g/10 min) manufactured by LOTTE CHEMICAL CORPORATION) were used. The polypropylene resins of two kinds were input to the two extruders of the nonwoven fabric manufacturing device, and the extruders performed heating and melting at 240°C. The gear pump was set such that the mass ratio became 50/50, and a molten resin was discharged from the spinneret at a spinning speed of 0.3 g/min per hole. The discharged fibers were sprayed on the base material A (base material layer) from the spinneret at a distance of 30 cm using compressed air of 98 kPa (gauge pressure) heated at 400°C, and the fiber layer was formed. Moreover, another fiber layer was sprayed to the base material layer side of the fibrous structure constituted of the base material layer and the fiber layer, and thus a layered body having a form of fiber layer/base material A (base material layer)/fiber layer was made. The weight per area was arbitrarily set by adjusting the speed of the collection conveyor. The average fiber diameter was 1.8 $\mu$m, the weight per area of the fiber layer was 80 $\mu m^2$, the void fraction was 90.5%, and the density was 0.086 g/cm$^3$.

Regarding the layered body made as described above, the normal incidence sound absorption coefficient was measured. The sound absorbency in the low frequency range (the average sound absorption coefficient $\alpha$ within a range of 500 Hz to 1,000 Hz) was evaluated. The result was 0.44, which was favorable. The normal incidence sound absorption coefficient was measured, and the sound absorbency in the intermediate frequency range (the average sound absorption coefficient $\beta$ within a range of 800 Hz to 2,000 Hz) was evaluated. The result was 0.71, which was favorable. The normal incidence sound absorption coefficient was measured, and the sound absorbency in the high frequency range (the average sound absorption coefficient $\gamma$ within a range of 2,000 Hz to 5,000 Hz) was evaluated. The result was 0.93, which was favorable.

[Example 18]

Using the base material A and the foregoing fiber layers, a form of fiber layer/base material A/base material A/fiber layer was obtained. The normal incidence sound absorption coefficient was measured, and the sound absorbency in the low frequency range (the average sound absorption coefficient $\alpha$ within a range of 500 Hz to 1,000 Hz) was evaluated. The result was 0.45, which was favorable. In addition, the sound absorbency in the intermediate frequency range (the average sound absorption coefficient $\beta$ within a range of 800 Hz to 2,000 Hz) was evaluated. The result was 0.74, which was favorable. The sound absorbency in the high frequency range (the average sound absorption coefficient $\gamma$ within a range of 2,000 Hz to 5,000 Hz) was evaluated. The result was 0.93, which was favorable.

For Examples 19 and 20, samples for measuring a sound absorption coefficient were produced in a manner similar to Examples 17 and 18 except that the number of fiber layers or base material layers, the weight per area of the intermediate layer, and the like as shown in Table 3, and the normal incidence sound absorption coefficient was measured and evaluated.

Table 3 shows the constitutions and evaluation results of Examples 17 to 20. In addition, Fig. 2 shows a graph of sound absorption characteristics of Example 18 and Comparative Example 2.

[Table 3]

|  | Example 17 | Example 18 | Example 19 | Example 20 |
|---|---|---|---|---|
| Layer constitution (Note 1) | */* | *//* | *//* | */*/* |
| Void fraction of fiber layer (%) | 90.5 | 90.5 | 90.5 | 90.5 |
| Density of fiber layer (g/cm$^3$) | 0.086 | 0.086 | 0.086 | 0.086 |
| Weight per area of fiber layer (g/m$^2$) | 80 | 80 | 80 | 80 |

(continued)

|  | Example 17 | Example 18 | Example 19 | Example 20 |
|---|---|---|---|---|
| Average flow rate pore diameter of fiber layer ($\mu$m) | 8.7 | 8.7 | 8.7 | 8.7 |
| Remarks for fiber layer | MB fibers 2 layers | MB fibers 2 layers | MB fibers 2 layers | MB fibers 3 layers |
| Void fraction of base material layer (%) | 95.6 | 95.6 | 97.5 | 95.6 |
| Density of base material layer (g/cm$^3$) | 0.040 | 0.040 | 0.029 | 0.040 |
| Weight per area of base material layer (g/m$^2$) | 200.0 | 400.0 | 400.4 | 200.0 |
| Thickness of base material layer (mm) (Note 2) | 5 | 10 | 7 | 5 |
| Remarks for base material layer | Base material A 1 base material layer | Base material A×2 1 base material layer | Base material F×2 1 base material layer | Base material A 2 base material layers |
| Sound absorption coefficient 500 to 1,000 Hz | 0.44 | 0.45 | 0.49 | 0.52 |
| Sound absorption coefficient 800 to 2,000 Hz | 0.71 | 0.74 | 0.75 | 0.80 |
| Sound absorption coefficient 2,000 to 5,000 Hz | 0.93 | 0.93 | 0.94 | 0.91 |
| Thickness of sound absorption member (mm) | 6.8 | 11.8 | 15.8 | 12.7 |
| (Note 1) The mark * indicates a fiber layer, and the mark / indicates a base material. Constitutions (e.g. protective layer) other than the fiber layer and the base material are omitted. (Note 2) The thickness per one base material layer is indicated. | | | | |

As shown in Tables 1 to 3, all of Examples 1 to 20 having a constitution in which a base material layer having a low density is sandwiched between dense fiber layers exhibited high sound absorbency.

[Comparative Example 1]

A commercially available polypropylene resin nonwoven fabric (Thinsulate TAI1590 manufactured by 3M Company having a fiber diameter within a range of 0.7 $\mu$m to 4.0 $\mu$m and a thickness of 13 mm) was punched into a circular shape having a diameter of 16.6 mm to obtain a sample for measuring a sound absorption coefficient.

The normal incidence sound absorption coefficient was measured, and the sound absorbency in the low frequency range (the average sound absorption coefficient $\alpha$ within a range of 500 Hz to 1,000 Hz) was evaluated. The result was 0.16. In addition, the sound absorbency in the intermediate frequency range (the average sound absorption coefficient $\beta$ within a range of 800 Hz to 2,000 Hz) was evaluated, and the result was 0.23. The sound absorbency in the high frequency range (the average sound absorption coefficient $\gamma$ within a range of 2,000 Hz to 5,000 Hz) was evaluated, and the result was 0.86.

[Comparative Example 2]

A commercially available polypropylene resin nonwoven fabric (Thinsulate T2203 manufactured by 3M Company having a fiber diameter within a range of 0.7 $\mu$m to 4.0 $\mu$m and a thickness of 29 mm) was punched into a circular shape having a diameter of 16.6 mm to obtain a sample for measuring a sound absorption coefficient.

The normal incidence sound absorption coefficient was measured, and the sound absorbency in the low frequency range (the average sound absorption coefficient $\alpha$ within a range of 500 Hz to 1,000 Hz) was evaluated. The result was 0.19. In addition, the sound absorbency in the intermediate frequency range (the average sound absorption coefficient $\beta$ within a range of 800 Hz to 2,000 Hz) was evaluated, and the result was 0.29. The sound absorbency in the high frequency range (the average sound absorption coefficient $\gamma$ within a range of 2,000 Hz to 5,000 Hz) was evaluated, and the result was 0.88.

[Comparative Example 3]

A constitution similar to that of Example 1 was provided except that one fiber layered body formed of two layers was used. A sample for measuring a sound absorption coefficient having one the fiber layer (nonwoven fabric E-fiber layer) was obtained.
The normal incidence sound absorption coefficient was measured, and the sound absorbency in the low frequency range (the average sound absorption coefficient $\alpha$ within a range of 500 Hz to 1,000 Hz) was evaluated. The result was 0.16, and the sound absorbency in the low frequency range was insufficient. In addition, the sound absorbency in the intermediate frequency range (the average sound absorption coefficient $\beta$ within a range of 800 Hz to 2,000 Hz) was evaluated, and the result was 0.21, which was insufficient. The sound absorbency in the high frequency range (the average sound absorption coefficient $\gamma$ within a range of 2,000 Hz to 5,000 Hz) was evaluated, and the result was 0.52, which was insufficient.

[Comparative Example 4]

A constitution similar to that of Example 1 was provided except that one base material A was used. The base material A was adopted as a sample for measuring a sound absorption coefficient.
The normal incidence sound absorption coefficient was measured, and the sound absorbency in the low frequency range (the average sound absorption coefficient $\alpha$ within a range of 500 Hz to 1,000 Hz) was evaluated. The result was 0.04, and the sound absorbency in the low frequency range could not be obtained, which was poor. In addition, the sound absorbency in the intermediate frequency range (the average sound absorption coefficient $\beta$ within a range of 800 Hz to 2,000 Hz) was evaluated, and the result was 0.06, which was poor. The sound absorbency in the high frequency range (the average sound absorption coefficient $\gamma$ within a range of 2,000 Hz to 5,000 Hz) was evaluated, and the result was 0.11, which was poor.

[Comparative Example 5]

A constitution similar to that of Example 1 was provided except that three base materials A were used. The three base materials A were superposed and adopted as a sample for measuring a sound absorption coefficient.
The normal incidence sound absorption coefficient was measured, and the sound absorbency in the low frequency range (the average sound absorption coefficient $\alpha$ within a range of 500 Hz to 1,000 Hz) was evaluated. The result was 0.09, and the sound absorbency in the low frequency range could not be obtained, which was poor. In addition, the sound absorbency in the intermediate frequency range (the average sound absorption coefficient $\beta$ within a range of 800 Hz to 2,000 Hz) was evaluated, and the result was 0.14, which was poor. The sound absorbency in the high frequency range (the average sound absorption coefficient $\gamma$ within a range of 2,000 Hz to 5,000 Hz) was evaluated, and the result was 0.31, which was poor.

[Comparative Example 6]

The microfiber structure (fiber layers) obtained in Example 17 was peeled off from the base material A, and six base materials A were superposed to obtain a fibrous structure (used as a base material layer in the present example) having a thickness of 5.4 mm. Moreover, the fiber layered bodies constituted of two layers including the nonwoven fabric E and the PVDF-HFP microfibers made in Example 1 were superposed. The fiber layered bodies were superposed in a form of nonwoven fabric E/PVDF-HFP microfiber structure/microfiber layer structure (six)/PVDF-HFP microfiber structure/nonwoven fabric E to obtain a sample for measuring a sound absorption coefficient.
The normal incidence sound absorption coefficient was measured, and the sound absorbency in the intermediate frequency range (the average sound absorption coefficient $\beta$ within a range of 800 Hz to 2,000 Hz) was evaluated. The result was 0.44, which was favorable. However, when the sound absorbency in the low frequency range (the average sound absorption coefficient $\alpha$ within a range of 500 Hz to 1,000 Hz) was evaluated, the result was 0.08, and the sound absorbency in the low frequency range could not be obtained, which was poor. The sound absorbency in the high frequency range (the average sound absorption coefficient $\gamma$ within a range of 2,000 Hz to 5,000 Hz) was evaluated, and the result was 0.60, which was poor.

[Comparative Example 7]

A constitution similar to that of Example 17 was provided except that the distance from the spinneret thereof was set to 60 cm. A layered body having a form of fiber layer G/base material A (base material layer)/fiber layer was made. The average fiber diameter was 1.8 $\mu$m, the weight per area of the fiber layer was 80 $\mu$m$^2$, the void fraction was 96.0%, and the density was 0.036 g/cm$^3$. A form of fiber layer G/base material A/base material A/fiber layer G was obtained. The normal incidence sound absorption coefficient was measured, and the sound absorbency in the low frequency range (the average sound absorption coefficient $\alpha$ within a range of 500 Hz to 1,000 Hz) was evaluated. The result was 0.25, which was favorable. In addition, the sound absorbency in the intermediate frequency range (the average sound absorption coefficient $\beta$ within a range of 800 Hz to 2,000 Hz) was evaluated, and the result was 0.65, which was favorable. The sound absorbency in the high frequency range (the average sound absorption coefficient $\gamma$ within a range of 2,000 Hz to 5,000 Hz) was evaluated, and the result was 0.88, which was poor.

Table 4 shows the constitutions and results of Comparative Examples 1 to 7.

[Table 4]

| | Comparative Example 1 | Comparative Example 2 | Comparative Example 3 | Comparative Example 4 | Comparative Example 5 | Comparative Example 6 | Comparative Example 7 |
|---|---|---|---|---|---|---|---|
| Layer constitution (Note 1) | / | / | * | / | /// | */////* | */* |
| Void fraction of fiber layer (%) | - | - | 90.0 | - | - | 90.0 | 96.0 |
| Density of fiber layer (g/cm$^3$) | - | - | 0.018 | - | - | 0.18 | 0.036 |
| Average flow rate pore diameter of fiber layer (μm) | - | - | 1.7 | - | - | 1.7 | 12.6 |
| Remarks for fiber layer | - | - | Electrospinning 1 fiber layer | - | - | Electrospinning 2 fiber layers | MB fibers 2 layers (not included in the range of void fraction) |
| Void fraction of base material layer (%) | 98.7 | 99.0 | - | 95.6 | 95.6 | 90.5 | 95.6 |
| Density of base material layer (g/cm$^3$) | 0.012 | 0.009 | - | 0.040 | 0.040 | 0.086 | 0.040 |
| Weight per area of base material layer (g/m$^2$) | 156.0 | 252.0 | - | 200.0 | 600.0 | 480.0 | 400.0 |
| Thickness of base material layer (mm) (Note 2) | 13 | 28 | - | 5 | 15 | 5.4 | 10 |
| Remarks for base material layer | Commercially available product | Commercially available product | - | Base material A | Base material A×3 | Base material (not included in the range of void fraction) | Base material A×2 |

(continued)

| | Comparative Example 1 | Comparative Example 2 | Comparative Example 3 | Comparative Example 4 | Comparative Example 5 | Comparative Example 6 | Comparative Example 7 |
|---|---|---|---|---|---|---|---|
| Sound absorption coefficient 500 to 1,000 Hz | 0.16 | 0.19 | 0.16 | 0.04 | 0.09 | 0.08 | 0.25 |
| Sound absorption coefficient 800 to 2,000 Hz | 0.23 | 0.29 | 0.21 | 0.06 | 0.14 | 0.44 | 0.65 |
| Sound absorption coefficient 2,000 to 5,000 Hz | 0.86 | 0.88 | 0.52 | 0.11 | 0.31 | 0.60 | 0.88 |
| Thickness of sound absorption member (mm) | 13 | 28 | 0.02 | 5 | 15 | 5.4 | 14.4 |
| (Note 1) The mark * indicates a fiber layer, and the mark / indicates a base material. Constitutions (e.g. protective layer) other than the fiber layer and the base material are omitted.<br>(Note 2) The thickness per one base material layer is indicated. | | | | | | | |

EP 3 730 285 A1

As shown in Table 4, in Comparative Examples 1, 2, 4, and 5 having no dense fiber layer on the outward side, even though the thickness of the sound absorption member was increased, there was a limit to the improvement of the sound absorbency, and the results could not reach a target value. In addition, in Comparative Example 3 having only a dense fiber layer as well, the sound absorbency was insufficient. Moreover, in Comparative Example 6 in which a layer having a void fraction of less than 95% was sandwiched between dense fiber layers as well, the sound absorbency was insufficient. In addition, in Comparative Example 7 in which a layer having a void fraction exceeding 94% was used as a fiber layer, the sound absorbency in the high sound range was insufficient.

[Industrial Applicability]

A laminated sound absorption member of the present invention exhibits excellent sound absorbency in a low frequency to a high frequency range and particularly exhibits excellent sound absorbency in the high frequency range. Therefore, the laminated sound absorption member can be utilized as a sound absorption member in fields having problems of sound intrusion. Specifically, the laminated sound absorption member can be used as a sound absorption member used in ceilings, walls, floors, and the like of houses; a soundproof wall of expressways, railway lines, and the like; a soundproof material of home appliances; a sound absorption member disposed in each part of vehicles such as trains and automobiles; and the like.

**Claims**

1.  A laminated sound absorption member comprising:

    at least two fiber layers; and
    at least one base material layer that is present between a fiber layer and another fiber layer,
    wherein the fiber layers have a void fraction within a range of 85% to 94% and a density within a range of 0.06 g/cm$^3$ to 0.5 g/cm$^3$,
    wherein the base material layer has a void fraction within a range of 95% to less than 100% and a density within a range of 0.008 g/cm$^3$ to 0.05 g/cm$^3$, and
    wherein the base material layer is at least one kind selected from the group consisting of nonwoven fabrics and woven fabrics.

2.  The laminated sound absorption member according to claim 1,
    wherein the fiber layers have a weight per area within a range of 0.1 g/m$^2$ to 200 g/m$^2$.

3.  The laminated sound absorption member according to claim 1 or 2,
    wherein a base material constituting the base material layer is a nonwoven fabric formed of fibers of at least one kind selected from the group consisting of polyethylene phthalate, polybutylene terephthalate, polyethylene, and polypropylene, or composite fibers of two or more kinds selected from the group consisting of polyethylene phthalate, polybutylene terephthalate, polyethylene, and polypropylene; and the base material layer has a weight per area within a range of 1 g/m$^2$ to 500 g/m$^2$.

4.  The laminated sound absorption member according to any one of claims 1 to 3,
    wherein fibers constituting the fiber layers are at least one kind selected from the group consisting of polyvinylidene fluoride, nylon 6,6, polyacrylonitrile, polystyrene, polyurethane, polysulfone, and polyvinyl alcohol.

5.  The laminated sound absorption member according to any one of claims 1 to 4,
    wherein in a normal incidence sound absorption coefficient measurement method, an average sound absorption coefficient ($\alpha$) of sound absorption coefficients within a frequency range of 500 Hz to 1,000 Hz is calculated, and a value of the average sound absorption coefficient ($\alpha$) is within a range satisfying the following expression,

$$1.00 \geq \alpha \geq 0.20.$$

6.  The laminated sound absorption member according to any one of claims 1 to 5,
    wherein in a normal incidence sound absorption coefficient measurement method, an average sound absorption coefficient ($\beta$) of sound absorption coefficients within a frequency range of 800 Hz to 2,000 Hz is calculated, and a value of the average sound absorption coefficient (β) is within a range satisfying the following expression,

$$1.00 \geq \beta \geq 0.30.$$

7. The laminated sound absorption member according to any one of claims 1 to 6,
wherein in a normal incidence sound absorption coefficient measurement method, an average sound absorption coefficient (γ) of sound absorption coefficients within a frequency range of 2,000 Hz to 5,000 Hz is calculated, and a value of the average sound absorption coefficient (γ) is within a range satisfying the following expression,

$$1.00 \geq \gamma \geq 0.89.$$

FIG. 1

FIG. 2

## INTERNATIONAL SEARCH REPORT

| | International application No. |
|---|---|
| | PCT/JP2018/045649 |

| A. CLASSIFICATION OF SUBJECT MATTER |
|---|
| Int.Cl. B32B5/26(2006.01)i, G10K11/168(2006.01)i |
| |
| According to International Patent Classification (IPC) or to both national classification and IPC |

| B. FIELDS SEARCHED |
|---|
| Minimum documentation searched (classification system followed by classification symbols) |
| Int.Cl. B32B1/00-43/00, G10K11/16-11/178, D04H1/00-18/04 |

| Documentation searched other than minimum documentation to the extent that such documents are included in the fields searched | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

| Electronic data base consulted during the international search (name of data base and, where practicable, search terms used) |
|---|
| |

| C. DOCUMENTS CONSIDERED TO BE RELEVANT | | |
|---|---|---|
| Category* | Citation of document, with indication, where appropriate, of the relevant passages | Relevant to claim No. |
| X | JP 11-240088 A (BRIDGESTONE CORPORATION) 07 September 1999, claims, example 1, paragraphs [0007], [0012], [0019], fig. 3 (Family: none) | 1-7 |
| A | JP 2004-346654 A (UNITICA FIBERS LTD.) 09 December 2004, examples (Family: none) | 1-7 |
| A | WO 2014/174696 A1 (AUTONETWORKS TECHNOLOGIES, LTD.) 30 October 2014, examples 1, 2 & US 2016/0042730 A1, examples 1, 2 & DE 112013006984 T & CN 105144284 A | 1-7 |
| P, X P, A | WO 2018/182001 A1 (MITSUI CHEMICALS, INC.) 04 October 2018, example 2 (Family: none) | 1-6 7 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01 February 2019 (01.02.2019) | 12 February 2019 (12.02.2019) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011508113 PCT
- JP 2008537798 PCT
- JP 2015030218 A
- JP 2016121426 A